# EUROPEAN PATENT SPECIFICATION

(11) **EP 1 337 815 B1**
(45) Date of publication and mention of the grant of the patent: **02.09.2009**
(21) Application number: 01998798.1
(22) Date of filing: 24.11.2001
(51) Int. Cl.: G01G 15/00, G01G 19/14

(54) **METHOD AND APPARATUS FOR WEIGHING SUSPENDED OBJECTS**
VERFAHREN UND VORRICHTUNG ZUM WIEGEN HÄNGENDER OBJEKTE
PROCEDE ET APPAREIL POUR PESER DES OBJETS SUSPENDUS

(30) Priority: 28.11.2000 DK 200001795
(43) Date of publication of application: 27.08.2003
(73) Proprietor: Linco Food Systems A/S, 8380 Trige (DK)
(72) Inventor: KJELDSEN, Poul, DK-8400 Ebeltoft (DK); BANG, Michael, DK-8680 Ry (DK); KVORNING, Keld, DK-8963 Auning (DK)
(74) Representative: Nielsen, Leif
(86) International application number: PCT/DK2001/000780
(87) International publication number: WO 2002/044670

(56) References cited:
- WO-A1-98/15804
- WO-A1-99/26045

## Description

The present invention concerns an apparatus for transporting and weighing items that are suspended in suspension means in a transport facility for transporting the items along a path, the apparatus comprising a transfer unit with at least one rotating body comprising plural weighing devices each having suspension means in which an item may be suspended and which is used by the transferring of the items from a first section to a second section of the transport facility, as the weighing devices are movable along the path for transfer between the first and second section with the item suspended therein during the transfer, the apparatus comprising means for lifting free and transferring the items from one section to the transfer unit and back.

Furthermore, the invention concerns a method for transporting and weighing items suspended in suspension means in a transport facility for transporting the items along a path, the method comprising steps where the items are transferred in a unit with at least one rotating body comprising a plurality of weighing devices in which an item is suspended during the transfer from a first section to a second section of the transport facility, as the weighing devices are moved along the transfer path with the item suspended therein, and where the items are lifted free and transferred from a section to the transfer unit and back.

The invention is developed in connection with handling and weighing of poultry carcasses or parts thereof, e.g. thighs, breast parts or other. However, the problems connected with the invention are of general character and may also be used in connection with apparatuses and method where other items are handled.

Many apparatuses of the kind mentioned in the introduction are known, particularly for handling poultry carcasses. The carcasses are transported as they are usually suspended in shackles mounted in a conveyor which may comprise one or more conveyor lines. The carcasses are moved through several processing steps that may comprise slaughtering, cleaning, cutting up, cooling, weighing, selection, etc.

There is a demand for more efficient and rapid apparatuses which require increased processing speed, something which can give problems with insufficient time for performing correct weighing of the items.

Furthermore, there is a demand for more compact apparatuses, where the carcasses are hanging as closely as possible out of consideration to efficient utilisation of certain processing facilities, such as cooling plants. However, there will be a risk that the carcasses touch each other during the weighing, which gives an imprecise result.

In order to relieve these drawbacks there are suggested apparatuses and methods, e.g. in WO 9815804. Even though the described apparatuses and methods enables providing sufficient distance between the carcasses in order to achieve a precise weighing, so this technique is connected with drawbacks.

In order to establish separation, there is need for separating a row of items into two or more paths where the carcasses are disposed with greater spacing and may be advanced at a lower speed. Hereby there is achieved more time for weighing and possibility for taring between each weighing, which makes it possible to attain very precise weighings which e.g. are necessary before packing.

There is established a transfer of the carcasses from a first conveyor section to the weighing station and further on to a second conveyor section by means of weighing devices. By divisioning, the apparatus becomes more complicated as more functions have to be established for each path.

Furthermore, there is a need for the first and second section having shackles placed with the same spacing, or that the same relation between transport speed and shackle spacing is present in the two sections. Often there is need for enabling transfer of the carcasses from one conveyor section to another where the shackle distance is lesser or greater together with a need for transfer between sections with different speeds, e.g. with a possibility for a buffer storage place in the transfer unit.

This may e.g. be the case with a transfer of carcasses from a partly filled conveyor to a succeeding conveyor, where the carcasses are desired to be packed tightly. In these situation there is a desire for flexibility in the speeds and shackle spacings used in the sections of the transport facility at each side of the transfer unit.

It is the purpose of the invention to indicate an apparatus and a method of the kind mentioned in the introduction which relieve these drawbacks and enable the establishing of a kind of increased or reduced distance between the items without any need for dividing into two or more tracks in order thereby to achieve precise weighing, and where there is possibility for operating with different spacings between the items before and after the transfer.

This is achieved with an apparatus which is peculiar in that the transfer unit includes at least one rotating body where the suspending means and/or the weighing devices are arranged displaceable in radial direction or in the peripheral direction relative to an axis of rotation for the rotating body as the mutual distance between the items is hereby changed along the path for transfer between the said first and second sections.

The method according to the invention is peculiar in that the suspension means and/or the weighing devices are displaced in radial direction or in peripheral direction relative to an axis of rotation for a rotating body in which they are mounted, as the mutual distance between the items is hereby changed along the path for the transfer between the first and second sections.

When the apparatus is intended for handling poultry carcasses, each weighing device will include a weigh cell provided with a gripping device or shackle for suspending a poultry carcass.

As the suspension means or the weighing devices are displaceable in the transfer unit, the greater spacing may be established either by displacement only in radial direction, whereby increased distance is achieved due to the increased diameter, or by a displacement in the peripheral direction, whereby the increased mutual spacing is established at least in the part of the movement where the weighing occurs. The transfer unit may be placed in-line without any need for division into several paths.

By suitable dimensioning of the rotating body, it is possible to achieve the necessary stay time for correct weighing in a first part of the rotational movement, and there will be a possibility for performing taring in the second part of the rotational movement. Possible remains of meat or other remains in the suspension means will not give rise to any erroneous recording of the weight of subsequent items.

The rotating body is preferably a largely circular plate, and the weighing devices are preferably weigh cells mounted on a bracket at the peripheral edge of the plate.

The circular plate is preferably mounted on an asymmetrically disposed shaft and comprises one or more weighing devices at its peripheral edge displaceable in the peripheral direction. This displacement is preferably established as the weighing devices are mounted on brackets which via undercut grooves are in displacing engagement with corresponding undercut circular grooves along the peripheral edge of the plate for displacement in the peripheral direction as a guided knob on the bracket engages a radial knob groove in the apparatus.

When the brackets are rotated, they will, by the interaction with the radial knob grooves, be displaced in the circular grooves which are rotated asymmetrically for achieving a greater mutual spacing until they are in a position farthest from the axis of rotation and then be displaced for lesser mutual spacing until they are in a diametrically opposite position closest to the axis of rotation.

The weighing is performed under this part of the rotation where weighing cells with items suspended therein are arranged with great mutual distance. At the end of the first part of the rotation, the items are lifted free and transferred to the succeeding conveyor section.

Taring of the weigh cells is performed in a second part of the rotation where the weigh cells are in the part of the rotation where they are closest to the axis of rotation, and where it does not have any significance that the empty weighing devices are placed with little mutual distance. When a weigh cell has performed a full rotation in the rotating body in which it is mounted, it will thus be ready for receiving a new item again.

Alternatively, it is possible to mount the weighing devices on telescoping devices at the peripheral edge of the plate for displacement in radial direction. Hereby is established mutual spacing between the items due to an increased distance to the axis of rotation. This alternative embodiment may be combined with the above described asymmetrical plate. Hereby is achieved a still greater distance between the items, when the telescopes are extended in the part of the rotational movement where the weighing devices are farthest from the axis of rotation.

According to a further embodiment, the apparatus is peculiar in that the transfer unit includes a rotating plate with weighing devices arranged in fixed positions at the peripheral edge and two circular plates which are disposed at each side of the rotating plate, and which are mounted on a asymmetrically disposed shaft, and which have suspension means arranged displaceable at the peripheral edge as they are mounted on brackets which via undercut grooves are in displacing engagement with corresponding undercut circular grooves along the peripheral edge of the plate for displacement in the peripheral direction as a guided knob on the bracket engages a radial knob groove in the apparatus.

In this embodiment, the items are detached from and attached to the conveyor sections of the asymmetrically rotating plates providing change in shackle spacing. One plate transfers the items with a well-defined distance to the weighing devices of the central weighing plate. The second plate transfers the items to the second conveyor section where the items may be carried on with different mutual spacing and/or speed than in the first conveyor section.

By choosing the position of shaft and thereby difference in spacing between the suspension means in these two plates, a large degree of freedom for varying speed and/or shackle spacing is attained in the two transport sections.

In this embodiment, one of the two plates are substituted by a buffer plate which is a well-known element in the applicant's plant. A buffer plate will preferably be placed downstream of the weighing plate and will usually have a capacity for accommodating a number of items that empirically are necessary in an actual plant and in an actual placing of the apparatus in such a handling facility.

According to a further embodiment, the apparatus according to the invention is peculiar in that the weighing devices are connected with a central computer arranged for recording and storing data for the weight of each individual item weighed in a first part of the rotational movement in which the weighing device carries the item, and which computer is adapted for taring the weighing device during a second part of the rotational movement of the weighing device.

By using the apparatus, there will be applied a method being peculiar in that the weighing is performed in a first part of the rotational movement where the weighing device carries the item, that the weighing result is recorded in a central computer registering and storing data for the weight of an individual item, and taring of the weighing device is performed during a second part of the rotational movement of the weighing device, and that this result is also registered in the computer and is used as correction at the subsequent weighing.

By registering data for each weighing and taring it becomes possible make corrections for possible material retained in gripping devices so that a correct and precise measuring result may be established for each single item. This measuring result may e.g. be used directly at the subsequent packing by the programme recording the position of the item in the conveyor. Thereby, the measuring result may be transferred to a packing, if desired.

The invention will now be explained more closely with reference to the accompanying drawing, wherein:
- Fig. 1: shows a partial view of a plant for transporting and processing poultry,
- Fig. 2: shows a first embodiment of an apparatus according to the invention that may form part of a plant illustrated in Fig. 1,
- Fig. 3: shows a variant of the embodiment shown in Fig. 2, and
- Figs. 4-7: show further embodiments of an apparatus according to the invention.

Subsequently, identical or corresponding items will be provided the same designations. Thus there will not be given any specific explanation in connection with each single Figure.

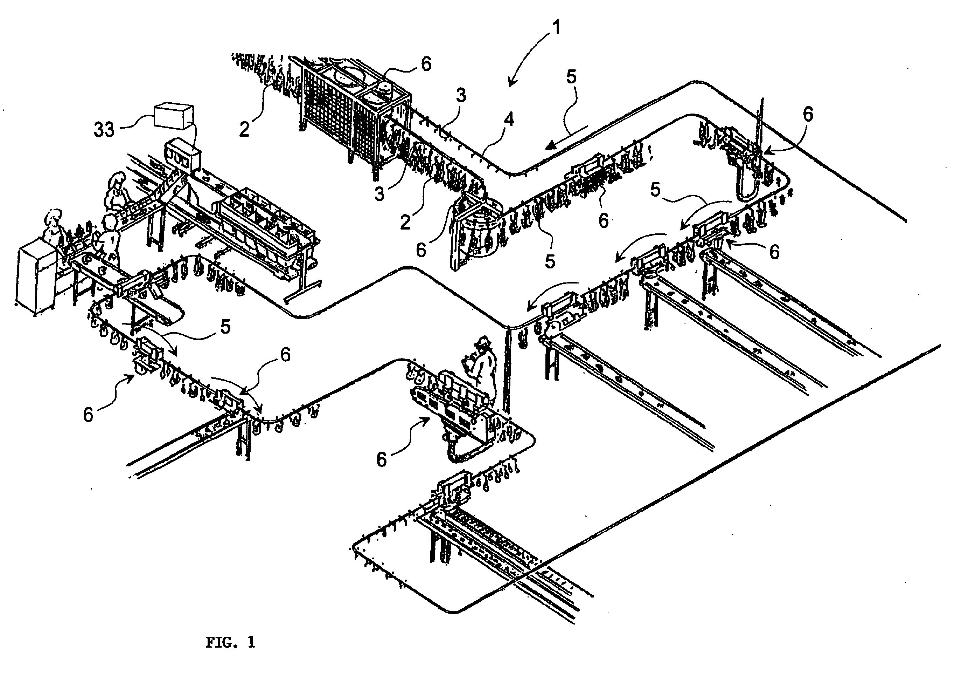

In Fig. 1 is seen a plant where items in the form of poultry carcasses 2, or parts thereof, are suspended in shackles 3 that are suspended in a conveyor 4 for transport through the plant according to the arrows. By the transportation through the plant, the poultry carcasses 2 are conveyed through different processing units 6 which may comprise buffer at the processing of wings, processing of legs, processing of carcass, removing bones etc. The conveyor 4 may be formed as a continuous transport like or consist of several sections where transfer of the poultry carcasses 2 from one section to another occurs.

In transport chains, the distance between shackles 3 will exceed 4", and typically be 6" or 8". This distance may, however, also be greater.

This distance is, however, too short when the poultry carcasses 2 are to be weighed as there is a risk of touching each other. It has appeared empirically that spacing between shackles by weighing is to be 12" or more in order to avoid that animal carcasses touch each other and give rise to an erroneous weighing result.

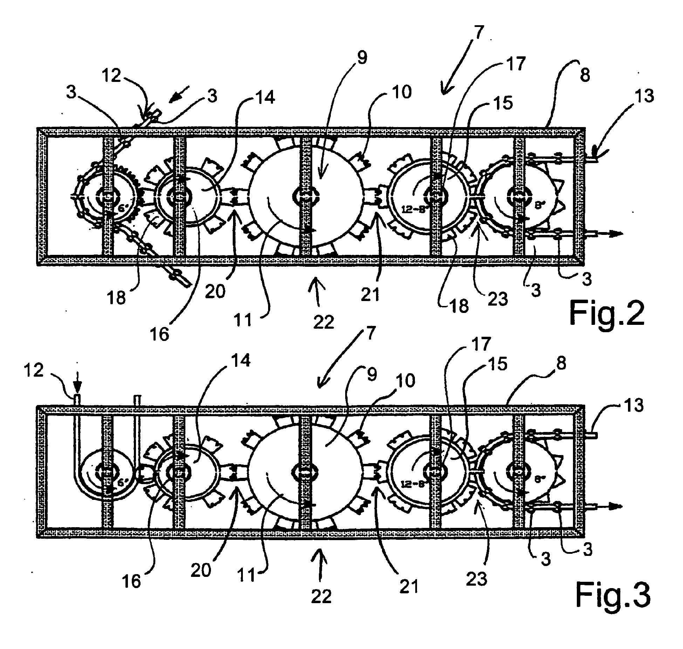

Fig. 2 illustrates an apparatus 7 according to the invention. The apparatus comprises a frame 8 supporting a rotating weighing plate 9 which is provided with several weighing devices 10 provided with shackles (not shown) in which the poultry carcasses are suspended and weighed when the plate rotates according to the arrow 11. The chicken carcasses are supplied from a first conveyor 12 in shackles indicated by 3. After weighing, the chicken carcasses are moved out via a second conveyor 13 where they are suspended in shackles 3. In the first conveyor 12, the shackle spacing is 6", and in the conveyor 13 the shackle spacing is 8".

Besides the rotating weighing plate 9, the apparatus 7 includes a first rotating plate 14 and a second rotating plate 15. The first and second rotating plates are circular plates mounted about an asymmetrical shaft 16 and 17, respectively. By off-setting the shaft, greater or lesser distances are possible by establishing a difference between the distance on brackets 18. Thus the brackets 18 in the area 19 will be provided with a mutual distance of 6" corresponding to the shackle spacing on the conveyor 12. In the area 20 at the opposite side, the mutual spacing is 12" corresponding to the spacing between the weighing devices 10.

The distance is established by the brackets having a pin (not shown) interacting with a radial groove (not shown) in the apparatus. Brackets 18 will hereby during rotation of the plates 14 and 15, respectively, be displaced in peripheral direction, whereby the mutual distance is varied according to the angle which they rotate.

Such control of the brackets is wellknown from overhangers marketed by the applicant.

In the area 21, the items are applied from the weighing device to the second asymmetrical plate 15. At the rotation through a path 22 from area 20 to area 21, weighing of the item is performed. After delivering the item, calibration of the weighing devices may be performed at the rotation of the weighing devices from position 20 to 21, so that at the subsequent weighing allowance is made for possible remaining material which has remained attached in a weighing device 10.

At the position 21, animal carcasses are transferred to the brackets 18 which are provided with a mutual spacing of 12". As a second plate 15 has a less asymmetrical placing of the shaft 17, a mutual shackle spacing of 8" will be provided in the area 23, so that the shackles are transferred to the other conveyor with a new shackle spacing of 8".

In Fig. 3 is illustrated an apparatus differing from the one shown in Fig. 2 by the use of an alternative guiding of the first conveyor 12 for supplying poultry carcasses 2 to the apparatus. In an analogous way, it will be possible to change the second conveyor 13. Also, it will be possible to change the position of the transfer position 23 so that it is not disposed diametrically opposite the position 21. Hereby, transfer to the second conveyor 13 may occur at a position where the distance between brackets 18 e.g. is 10", or a different distance.

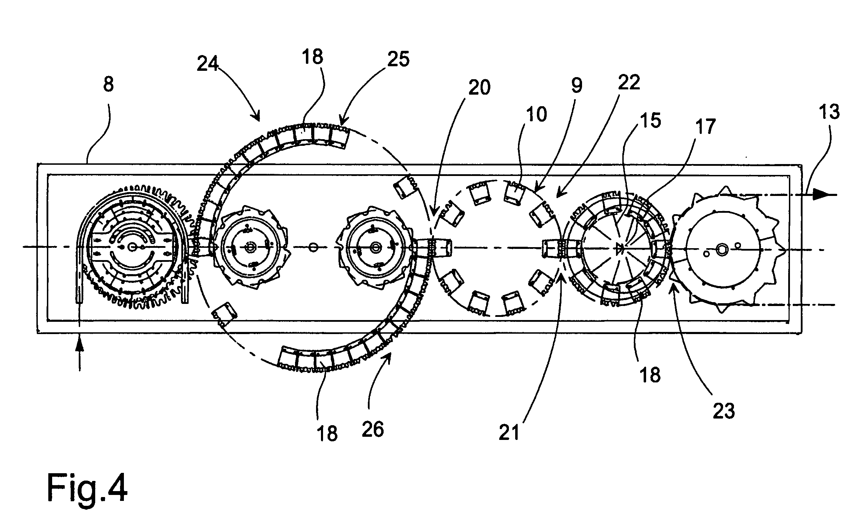

Fig. 4 illustrates an apparatus corresponding to the one illustrated in Figs. 2 and 3 but where a buffer wheel 24 is provided in place of the first rotating plate 14. On the buffer wheel 24 there is arranged a number of brackets 18 which can be accumulated in an area 25 to be filled with carcasses 2 when these by successive steps are advanced from the first conveyor 12. The buffer wheel 24 has a second area 26 where the filled brackets 18 are accumulated for transferring the carcasses 2 to the weighing plate 10. When transferring the poultry carcasses 2 are weighed when they pass through the path 22 from area 20 to area 21. At the return from area 21 to area 20, a taring of the weighing devices 10 is performed.

Also in this system, a first conveyor will be able to operate with a shackle spacing of 6 or 8", which is transferred to a shackle spacing of 12" in the weighing plate 9 for being transferred again to a shackle spacing of 8" in the second conveyor 13. Other shackle spacings are also possible.

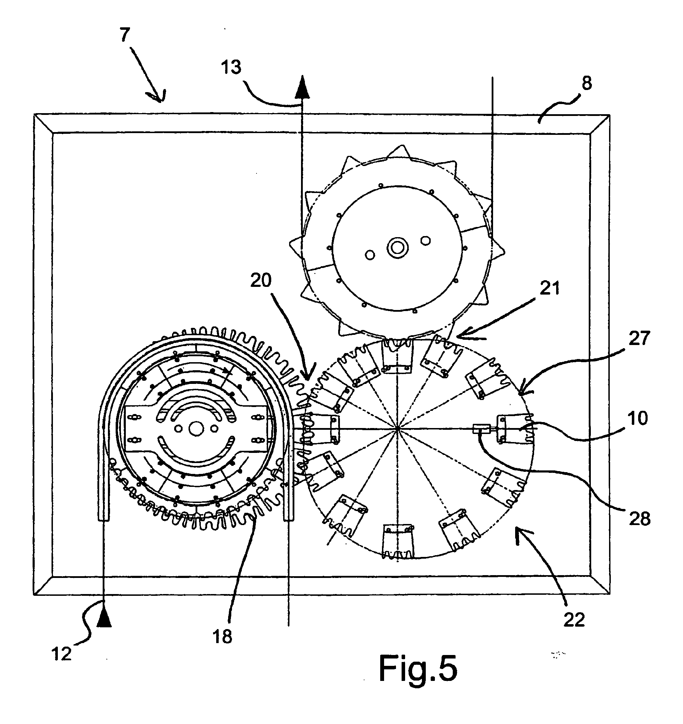

Fig. 5 illustrates a further embodiment of an apparatus where there is used a weighing plate 27 on which the weighing devices 10 are mounted on telescoping devices 28 (only one is indicated). At the extension or withdrawal of the telescoping devices 28, the weighing devices 10 may be placed for engaging the first conveyor 12 which e.g. has a shackle spacing of 6". On the weighing plate 27 an extension occurs, so that a shackle spacing of 12" occurs in the weighing area 22, and at the subsequent withdrawal, a shackle spacing of 8" can be established at the transfer to the second conveyor 13.

In the shown embodiment there is used a not round weighing plate 27 for supporting the weighing devices 10, which preferably will comprise weighing cells suspended in brackets which are displaceable as they are supported in radial grooves on the weighing plate 27.

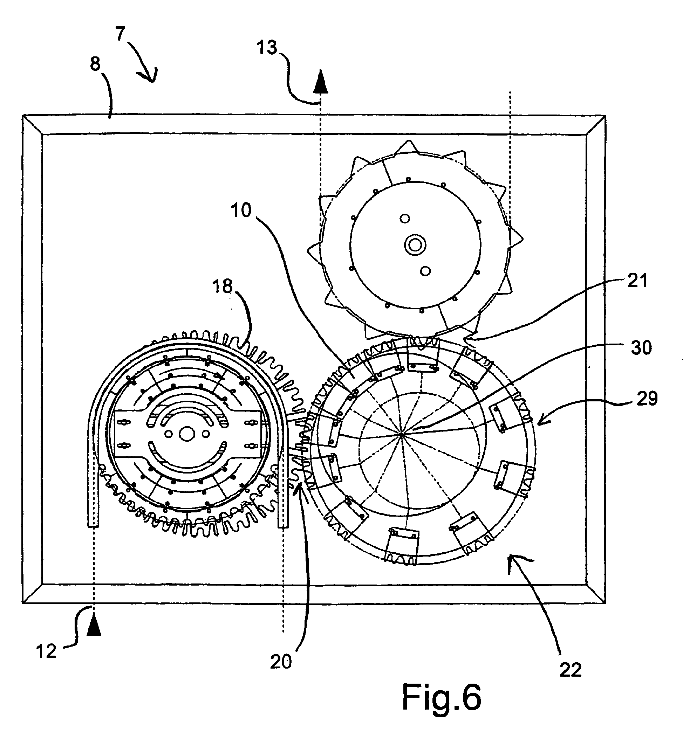

The embodiment of the apparatus illustrated in Fig. 6, differs from that shown in Fig. 5 by using a weighing plate 29 which is round and mounted around an asymmetrically positioned shaft 30 corresponding to the rotation of the first and second rotating plate 14,15 in Figs. 2-4. In this embodiment, it is thus the asymmetrical rotation of the weighing plate 29 which provides the separation between the weighing devices 10 in the path 22 where the weighing is performed.

In the embodiments shown in Figs. 5 and 6 taring will occur when the weighing devices 10 are transferred from the area 21 to the area 20.

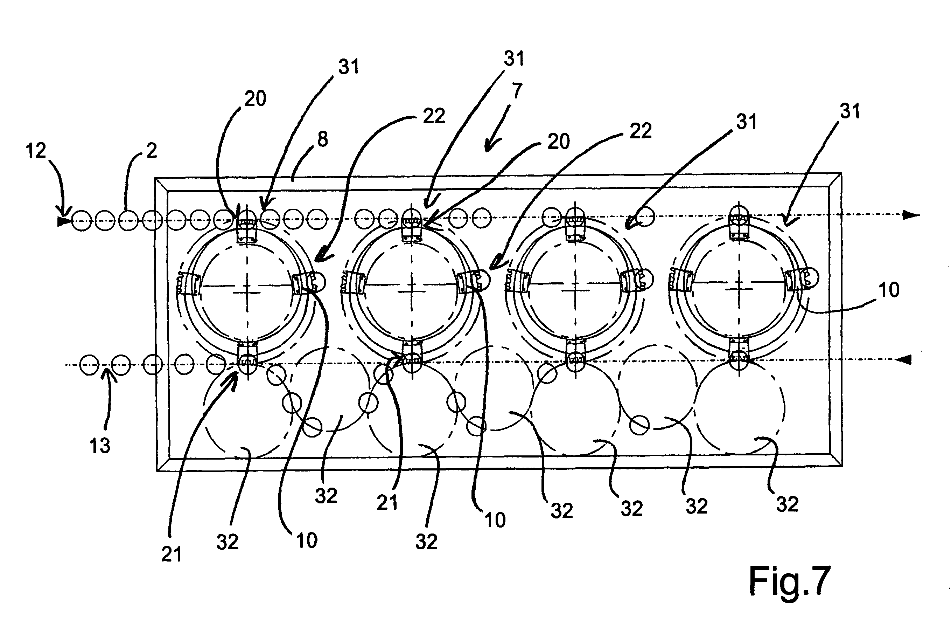

Fig. 7 illustrates a further embodiment of the apparatus 7 according to the invention. In this embodiment there is provided a row with four asymmetrically arranged weighing plates 31, each provided with four weighing devices 10. In the shown embodiment, the first conveyor has a shackle spacing of 6", and the second conveyor 13 has a shackle spacing of 8". This means that the second conveyor 13 is led around a row of further wheels 32 so that the shackle spacing fits as each of the weighing plates 31 takes every fourth poultry carcass from the first conveyor 12 and transfers it to the second conveyor 13.

By arranging the weighing plates 31 with greater or lesser asymmetrical rotation, it is possible to vary the relationship between the shackle spacing on the inlet conveyor 12 and the outlet conveyor 13.

Even though a number of four is shown, it will be possible to use another number of asymmetrical weighing plates 31 for simultaneous transfer of weighing of the poultry carcasses 2 which are indicated with circles in Fig. 7.

By using a plant 1 with an apparatus according to the invention, there will be provided a central computer as indicated by 33, and which comprises a connection to the weighing cells in the apparatus according to the invention, and which at the same time may be connected with packing machines or other devices for recording the individual weight of an animal carcass 2 on a packing. The computer 33 is simultaneously used for taring the weigh cells.

## Claims

1. An apparatus for transporting and weighing items that are suspended in suspension means in a transport facility for transporting the items along a path, the apparatus comprising a transfer unit with at least one rotating body comprising plural weighing devices each having suspension means in which an item may be suspended and which is used by the transferring of the items from a first section to a second section of the transport facility, as the weighing devices are movable along the path for transfer between the first and second section with the item suspended therein during the transfer, the apparatus comprising means for lifting free and transferring the items from one section to the transfer unit and back, **characterised in that** the transfer unit comprises at least one rotating body where the suspending means and/or the weighing devices are arranged displaceable in radial direction or in the peripheral direction relative to an axis of rotation for the rotating body as the mutual distance between the items is hereby changed along the path for transfer between the said first and second sections.

2. An apparatus according to claim 1, **characterised in that** the rotating body comprises a largely circular plate which is mounted on an asymmetrically disposed shaft and which at its peripheral edge comprises one or more weighing devices displaceable in the peripheral direction.

3. An apparatus according to claim 2, **characterised in that** the weighing devices are mounted telescoping devices at the peripheral edge of the plate for displacing in radial direction.

4. An apparatus according to claim 2, **characterised in that** the weighing devices are mounted on brackets which via undercut grooves are in displacing engagement with corresponding undercut circular grooves along the peripheral edge of the plate for displacement in the peripheral direction as a guided knob on the bracket engages a radial knob groove in the apparatus.

5. An apparatus according to claim 1, **characterised in that** the transfer unit comprises a rotating plate with weighing devices arranged in fixed positions at the peripheral edge and two circular plates disposed at each their side of the rotating plate, and which are mounted on an asymmetrically disposed shaft, and which have suspension means arranged displaceable at the peripheral edge as they are mounted on brackets which via undercut grooves are in displacing engagement with corresponding undercut circular grooves along the peripheral edge of the plate for displacement in the peripheral direction as a guided knob on the bracket engages a radial knob groove in the apparatus.

6. An apparatus according to any preceding claim, **characterised in that** each weighing device comprises a weighing cell that is provided with a gripping device for suspending a poultry carcass.

7. An apparatus according to any preceding claim, **characterised in that** the weighing devices are connected with a central computer arranged for registering and storing data for the weight of each individual item weighed in a first part of the rotational movement in which the weighing device carries the item, and which computer is adapted for taring the weighing device during a second part of the rotational movement of the weighing device.

8. A method for transporting and weighing items suspended in suspension means in a transport facility for transporting the items along a path, the method comprising steps where the items are transferred in a unit with at least one rotating body comprising a plurality of weighing devices in which an item is suspended during the transfer from a first section to a second section of the transport facility, as the weighing devices are moved along the transfer path with the item suspended therein, and where the items are lifted free and transferred from a section to the transfer unit and back, **characterised in that** the suspension means and/or the weighing devices are displaced in radial direction or in peripheral direction relative to an axis of rotation for a rotating body in which they are mounted, as the mutual distance between the items is hereby changed along the path for the transfer between the first and second sections.

9. A method according to claim 8, **characterised in that** the weighing is performed in a first part of the rotational movement where the weighing device carries the item, that the weighing result is registered in a central computer registering and storing data for the weight of an individual item, and taring of the weighing device is performed during a second part of the rotational movement of the weighing device, and that this result is also registered in the computer and is used as correction at the subsequent weighing.

## Patentansprüche

1. Anlage zum Fördern und Wiegen von in Aufhängegliedern aufgehängten Gegenständen in einer Fördervorrichtung zum Fördern der Gegenstände einer Strecke entlang, wobei die Anlage eine Übertragungseinheit mit wenigstens einem rotierenden Körper mit mehreren Wiegegliedern je mit Aufhängegliedern umfasst, worin ein Gegenstand aufgehängt werden kann, und die zur Übertragung der Gegenstände von einem ersten Teil zu einem zweiten Teil der Fördervorrichtung verwendet werden kann, da die Wiegeglieder der Strecke entlang zur Übertragung zwischen den ersten und zweiten Teil bewegbar sind, wobei der Gegenstand während der Übertragung darin aufgehängt ist, wobei die Anlage Einrichtungen zum Freiheben und Übertragung der Gegenstände von einem Teil zur Übertragungseinheit und zurück aufweist, **dadurch gekennzeichnet, dass** die Übertragungseinheit wenigstens einen rotierbaren Körper umfasst, wobei die Aufhängeglieder und/oder die Wiegeglieder in radialer Richtung oder in der Umkreisrichtung im Verhältnis zur Rotationsachse des rotierenden Körpers verschiebbar sind, da dabei der Abstand zwischen den Gegenständen der Strecke entlang zur Übertragung zwischen dem ersten und zweiten Teil geändert wird.

2. Anlage nach Anspruch 1, **dadurch gekennzeichnet, dass** der rotierende Körper eine im wesentlichen kreisförmige Platte umfasst, die auf einer asymmetrisch angeordneten Achse befestigt ist, und die an ihrer Umkreiskante eine oder mehrere, in der Umkreisrichtung verschiebbare Wiegeglieder aufweist.

3. Anlage nach Anspruch 2, **dadurch gekennzeichnet, dass** die Wiegeglieder teleskopische Glieder zur Verschiebung in radialer Richtung an der Umkreiskante der Platte vorgesehen sind.

4. Anlage nach Anspruch 2, **dadurch gekennzeichnet, dass** die Wiegeglieder in Träger befestigt sind, die durch hinterschnittene Nuten mit entsprechend hinterschnittenen kreisförmigen Nuten der Umkreiskante der Platte entlang zum Verschieben in der Umkreisrichtung in verschiebendem Eingriff sind, da ein geführter Knopf auf dem Träger mit einer radialen Knopfnute in der Anlage eingreift.

5. Anlage nach Anspruch 1, **dadurch gekennzeichnet, dass** die Übertragungseinheit eine rotierende Platte mit in festen Positionen an der Umkreiskante befestigten Wiegegliedern sowie zwei kreisförmige, an jeweils einer Seite der rotierenden Platte angeordnete Platten umfasst, und die auf einer asymmetrisch angeordneten Achse befestigt sind, und die an der Umkreiskante verschiebbar angeordnete Aufhängeglieder aufweisen, da sie auf Träger befestigt sind, die durch hinterschnittene Nuten mit entsprechend hinterschnittenen kreisförmigen Nuten der Umkreiskante der Platte zur Verschiebung in der Umkreisrichtung in verschiebender Eingriff sind, da ein geführter Knopf auf dem Träger mit einer radialen Knopfnute in der Anlage eingreift.

6. Anlage nach irgendeinem der vorhergehenden Ansprüchen, **dadurch gekennzeichnet, dass** jedes Wiegeglied eine mit einer Griffvorrichtung zum Aufhängen eines Geflügelkörpers versehene Wägezelle aufweist.

7. Anlage nach irgendeinem der vorhergehenden Ansprüchen, **dadurch gekennzeichnet, dass** die Wiegeglieder zur Registrierung und Speichern von Gewichtsdaten jedes einzelnen, im ersten Intervall der rotierenden Bewegung gewogenen Gegenstands mit einem zentralen Rechner verbunden sind, wobei das Wiegeglied den Gegenstand trägt, und wobei der Rechner zur Tarierung des Wiegeglieds während des zweiten Intervalls der Rotationsbewegung des Wiegeglieds vorgesehen ist.

8. Verfahren zum Fördern und Wiegen von in Aufhängegliedern aufgehängten Gegenständen in einer Fördervorrichtung zum Fördern der Gegenstände einer Strecke entlang, wobei das Verfahren Schritte umfasst, worin die Gegenstände zu einer Einheit mit wenigstens einem eine Vielzahl von Wiegegliedern aufweisenden, rotierenden Körper überführt werden, wobei in den Wiegegliedern ein Gegenstand während der Übertragung von einem ersten Teil nach einem anderen Teil in der Fördervorrichtung aufgehängt ist, da die Wiegeglieder der Übertragungsstrecke entlang mit dem darin aufgehängten Gegenstand verschoben werden, und wobei die Gegenstände freigehoben und von einem Teil zur Übertragungseinheit und zurück überführt werden, **dadurch gekennzeichnet, dass** die in einem rotierenden Körper angeordneten Aufhängeglieder und/oder Wiegeeinrichtungen in radialer Richtung oder in der Umkreisrichtung bezüglich der Rotationsachse verschoben werden, da der Abstand zwischen den Gegenständen **dadurch** der Übertragungsstrecke entlang zwischen dem ersten und zweiten Teil geändert wird.

9. Verfahren nach Anspruch 8, **dadurch gekennzeichnet, dass** das Wiegen in einem ersten Teil der Rotationsbewegung, wobei das Wiegeglied den Gegenstand trägt, durchgeführt wird, dass das Wägeergebnis in einem zentralen Rechner registriert wird, der die Wägedaten eines individuellen Gegenstands registriert und speichert, und die Tarierung des Wiegeglieds während eines zweiten Intervalls der Rotationsbewegung des Wiegeglieds durchgeführt wird, und dass das Ergebnis im Rechner registriert wird und als Korrektion beim nachfolgenden Wiegen verwendet wird.

## Revendications

1. Appareil pour transporter et peser des objets suspendus aux moyens de suspension dans une installation de transport pour transporter les objets le long d'un parcours, l'appareil comprenant une unité de transfert avec au moins un corps rotatif comprenant plusieurs dispositifs de pesage ayant chacun des moyens de suspension dans lesquels un objet pouvant être suspendu et lesquels étant utilisés pour le transfert des objets d'une première section à une deuxième section de l'installation de transport, les dispositifs de pesage étant déplaçables le long du parcours pour le transfert entre la première et la deuxième section avec l'objet y suspendu pendant le transfert, l'appareil comprenant des moyens pour détacher et transférer les objets d'une section à l'unité de transfert et retour, **caractérisé en ce que** l'unité de transfert comprend au moins un corps rotatif où les moyens de suspensions et/ou les dispositifs de pesage sont arrangés de façon déplaçable dans la direction radiale ou dans la direction périphérique par rapport à un axe de rotation du corps rotatif, la distance mutuelle entre les objets est ainsi modifiée le long du parcours pour le transfert entre lesdites première et deuxième sections.

2. Appareil selon la revendication 1, **caractérisé en ce que** le corps rotatif comprend une plaque surtout circulaire montée sur une arbre disposée de façon asymétrique et qui comprend sur son bord périphérique un ou plusieurs dispositifs de pesage déplaçables dans la direction périphérique.

3. Appareil selon la revendication 2, **caractérisé en ce que** les dispositifs de pesage sont montés sur des dispositifs téléscopiques sur le bord périphérique de la plaque pour déplacer dans une direction radiale.

4. Appareil selon la revendication 2, **caractérisé en ce que** les dispositifs de pesage sont montés sur des supports étant engagés de façon déplaçable par des rainures gravées en dessous avec des rainures correspondantes, circulaires et gravées en dessous, le long du bord périphérique de la plaque pour un déplacement dans la direction périphérique, vu qu'une came guidée sur le support engage une rainure de came radiale dans l'appareil.

5. Appareil selon la revendication 1, **caractérisé en ce que** l'unité de transfert comprend une plaque rotative avec des dispositifs de pesage disposés dans des positions fixes sur le bord périphérique et deux plaques circulaires disposées sur chaque côté de la plaque rotative, et qui sont montées sur une arbre disposée de façon asymétrique, et qui ont des moyens de suspension disposés de façon déplaçable sur le bord périphérique étant donné qu'elles sont montées sur des supports qui, au moyen de rainures gravées en dessous, s'engagent de façon déplaçable avec des rainures correspondantes, circulaires et gravées en dessous, le long du bord périphérique de la plaque pour un déplacement dans la direction périphérique, vu qu'une came guidée sur le support engage une rainure de came radiale dans l'appareil.

6. Appareil selon l'une quelconque des revendications précédentes, **caractérisé en ce que** chaque dispositif de pesage comprend une cellule de pesage pourvue d'un dispositif de préhension pour suspendre une carcasse de volaille.

7. Appareil selon l'une quelconque des revendications précédentes, **caractérisé en ce que** les dispositifs de pesage sont connectés à un ordinateur central aménagé pour enregistrer et stocker des données du poids de chaque objet individuel pesé pendant une première partie du mouvement rotatif pendant laquelle le dispositif de pesage porte l'objet, et cet ordinateur étant adapté pour tarer le dispositif de pesage pendant une deuxième partie du mouvement rotatif du dispositif de pesage.

8. Procédé pour transporter et peser des objets suspendus aux moyens de suspension dans une installation de transport pour transporter les objets le long d'un parcours, le procédé comportant des étapes pendant lesquelles les objets sont transférés à une unité avec au moins un corps rotatif comprenant plusieurs dispositifs de pesage dans lesquels un objet est suspendu pendant le transfert à partir d'une première section à une deuxième section de l'installation de transport, les dispositifs de pesage étant déplacés le long du parcours pour le transfert avec l'objet y suspendu, et les objets sont détachés et transférés d'une section à l'unité de transfert et retournés, **caractérisé en ce que** les moyens de suspension et/ou les dispositifs de pesage étant déplacés dans une direction radiale ou une direction périphérique par rapport à un axe de rotation d'un corps rotatif auquel ils sont montés, la distance mutuelle entre les objets étant ainsi modifiée le long du parcours pour le transfert entre lesdites première et deuxième sections.

9. Procédé selon la revendication 8, **caractérisé en ce que** le pesage est effectué pendant une première partie du mouvement rotatif pendant laquelle le dispositif de pesage porte l'objet, que le résultat de pesage étant enregistré dans un ordinateur central pour enregistrer et stocker les données du poids d'un objet individuel, et le tarage du dispositif de pesage est effectué pendant une deuxième partie du mouvement rotatif du dispositif de pesage, et que ce résultat étant aussi enregistré dans l'ordinateur et utilisé comme correction du pesage suivant.
